## Europäisches Patentamt

## European Patent Office

## Office européen des brevets

(11) Publication number: **0 079 186**
**B1**

## EUROPEAN PATENT SPECIFICATION

(45) Date of publication of patent specification: **26.02.86**

(21) Application number: **82305789.8**

(22) Date of filing: **01.11.82**

(51) Int. Cl.⁴: **C 03 B 37/025,** C 03 B 37/02, C 03 C 25/02

(54) Apparatus for drawing optical fibers.

(30) Priority: **05.11.81 US 318374**
**05.11.81 US 318375**

(43) Date of publication of application:
**18.05.83 Bulletin 83/20**

(45) Publication of the grant of the patent:
**26.02.86 Bulletin 86/09**

(84) Designated Contracting States:
**AT DE FR GB IT NL**

(56) References cited:
**GB-A-2 044 751**
**US-A-4 208 200**

**JOURNAL OF APPLIED PHYSICS, vol. 50, no. 10, October 1979, American Institute of Physics, USA U.C. PAEK et al. "Forced convective cooling of optical fibers in high-speed coating", pages 6144-6148**

(73) Proprietor: **Corning Glass Works**
**Houghton Park**
**Corning New York 14831 (US)**

(72) Inventor: **Darcangelo, Charles Michael**
**401 Sunset Drive**
**Corning New York (US)**
Inventor: **Montierth, Max Romney**
**RD1 Carpenter Road**
**Elmira New York (US)**
Inventor: **Ni, Yang-Chou Michael**
**3347 Mantila Drive**
**Lexington Kentucky (US)**
Inventor: **Miller, Roger Allen**
**107 Weston Lane**
**Painted Post New York (US)**

(74) Representative: **Boon, Graham Anthony et al**
**Elkington and Fife High Holborn House 52/54**
**High Holborn**
**London, WC1V 6SH (GB)**

Courier Press, Leamington Spa, England.

## Description

This invention relates to an apparatus for drawing optical fibers.

Glass optical waveguide fibers are remarkably strong as they are drawn, but their strength is greatly affected by physical handling. They must therefore be coated with a protective material before they come in contact with the fiber drawing tractors. For a number of reasons including improved diameter control and cleanliness, the tractors should be as close as possible to the draw furnace. At a fixed distance from the furnace, the fiber becomes hotter as draw rate increases. Thus, to cool a fiber by natural cooling, longer distances are required for higher draw speeds. For example, to cool a 125 μm diameter fiber from 1780°C to a temperature needed to apply a cellulose acetate lacquer solution with acetone, approximately 0.8 m of cooling distance is required for a draw speed of 0.5 m/sec. A distance of 1.2 m is required to cool that fiber to 50°C at a draw speed of 0.75 m/sec., and 8 m is required if the draw speed is 5 m/sec.

The economical production of large quantities of optical waveguide fibers will undoubtedly require fiber drawing speeds greater than 1 m/sec. If no fiber cooling means is employed and if the distance between the furnace and the coating apparatus is not sufficiently long, there may be insufficient time at such higher drawing speeds for the fibers to cool by natural processes to temperatures which are compatible with application techniques employing presently developed waveguide coating materials. When the temperature of the fiber is too high, the coating may become too thin or discontinuous. If the coating is applied from a 100% solids solution, the hot fiber can cause the coating material to set up in the coating apparatus around the fiber, thus preventing any further coating material from being applied to the fiber.

The optical waveguide fiber coating system disclosed in U.S. Patent No. 4,208,200 employs means for cooling the hot fiber prior to its entering the coating apparatus. The cooling means comprises an elongate, liquid filled container through which the fiber passes. The bottom of the container is provided with a felt wiping die which seals the container and removes excess liquid from the fiber. In a system employing this type of fiber cooling device the fiber can become so hot that it boils the liquid at high draw rates. This causes turbulence which can move the fiber laterally so that it is displaced from its proper position in the diameter measuring device. Also, the wiping means physically contacts the fiber, a factor which might adversely affect fiber strength.

GB—A—2044751 describes an apparatus for drawing optical fiber, which comprises means for mounting a glass preform of which the tip is heated by a furnace to provide a source of glass from which a fiber is drawn, means for measuring the diameter of the fiber, and means for applying a protection coating to the fiber. Immediately downstream of the preform tip, and upstream of the measuring means, the fiber passes through a tube through which a gas stream flows. It is to be noted that the gas stream is heated before flowing through the tube.

The Journal of Applied Physics Vol. 50, No. 10, October 1979, American Institute of Physics, U.S.A. (U.C. Peak et al) describes at pages 6144—6148 an apparatus for drawing optical fibers comprising a source of softened or molten glass from which a fiber is drawn, means for cooling the fiber, means for measuring the diameter of the fiber, and means for applying a protective coating to the cooled fiber. It is to be noted that the cooling means is situated upstream of the measuring means and comprises a device for directing jets of air or liquid in a direction perpendicular to the length of the fiber.

It is therefore an object of the present invention to provide an appraatus capable of coating glass optical fibers that are drawn at relatively high drawing speeds.

According to the present invention there is provided an apparatus for drawing optical fibers comprising: a source of softened or molten glass from which a fiber is drawn; means for cooling said fiber; means situated between said source and said cooling means for measuring the diameter of said fiber; and means for applying a protective coating to the cooled fiber; characterised in that said cooling means comprises an elongate tube surrounding said fiber; a source of coolant gas; and means surrounding said fiber at one end of said tube for flowing said coolant gas such that it has a flow component which is directed radially inwardly toward said fiber and a flow component which is directed longitudinally toward the opposite end of said tube.

Preferably, the coolant gas is helium.

In the accompanying drawings:

Figure 1 is a schematic illustration in block diagram of an optical fiber drawing system;

Figure 2 is a cross-sectional view of a fiber cooling apparatus of the present invention; and

Figure 3 is a cross-sectional view illustrating an alternative embodiment of the fiber cooling apparatus of the present invention.

It is to be noted that the drawings are illustrative and symbolic of the present invention and that there is no intention to indicate the scale or relative proportions of the elements shown therein.

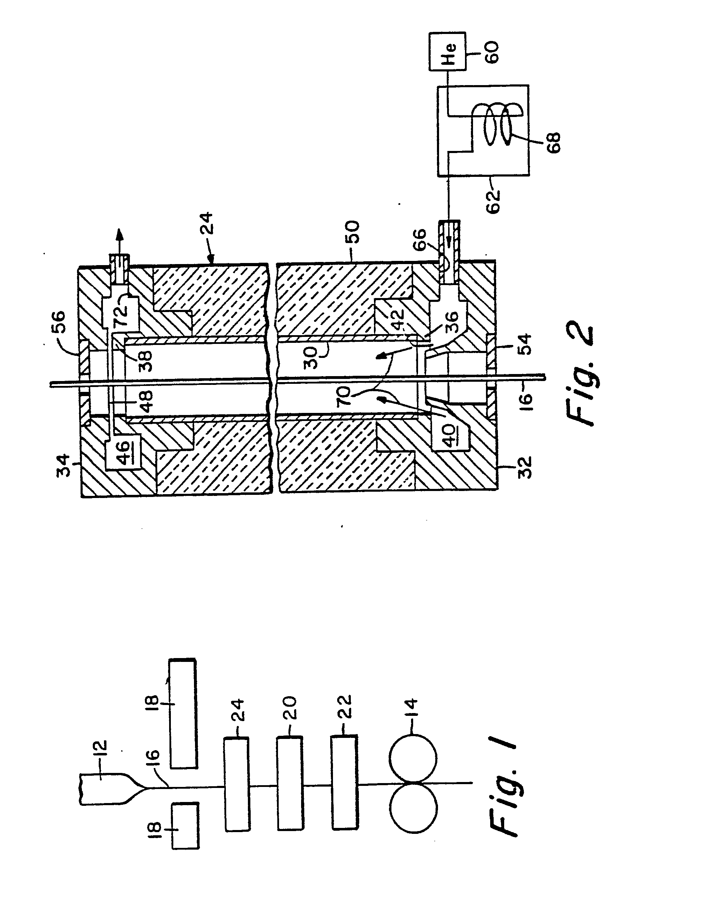

The conventional fiber drawing system shown in Figure 1 comprises a mass of glass 12 at least the tip of which is molten, and a pair of tractors 14 for drawing a fiber 16 from the molten glass. The output of an optical micrometer 18 is coupled to a control system which regulates the speed of the tractors 14 to control the diameter of the fiber. The fiber 16 passes through a coater 20 which applies to protective material thereto, and thereafter, it may pass through a dryer 22. At high draw speeds it is necessary to employ means 24 to cool the fiber to a temperature which does not detrimentally affect the coating material applied at coater 20.

A preferred embodiment of the improved fiber cooling means of the present invention is illustrated in Figure 2. Fiber 16 is drawn through a cylindrical coolant tube 30 which may be formed, for example, of stainless steel, glass, copper or aluminium. Tube 30 is provided with a lower end cap 32 for supplying thereto a dry, coolant gas such as helium, carbon dioxide or the like and with an upper end cap 34 for exhausting the helium or other coolant gas. End caps 32 and 34 are provided with inwardly projecting flanges 36 and 38, respectively, against which the ends of tube 30 abut. End cap 32 includes an annular manifold 40 which is connected to an annular slot 42. End cap 34 is provided with an annular manifold 46 which is connected to an annular slot 48. The central region of tube 30 between end caps 32 and 34 may be surrounded by a layer 50 of insulating material. The end caps may be provided with seats which receive iris diaphragms 54, and 56, respectively.

A source 60 of helium is connected by way of a heat exchanger 62 to an inlet orifice 66 of manifold 40. Heat exchanger 62 comprises an insulated reservoir containing a liquified gas such as liquid nitrogen, liquid argon, liquid helium or the like. Liquid nitrogen is preferred since it is relatively inexpensive. The helium from source 60 flows through a coil 68 which is submerged in the liquified gas. As the cooled helium emanates from annular slot 42, it flows toward fiber 16, and its buoyancy causes it to flow upwardly through tube 30. It is exhausted by way of slot 48, manifold 46 and exhaust orifice 72.

The iris diaphragms, which are commercially available, can be initially adjusted to provide a relatively large opening until the drawing process achieves steady state conditions. They can then be adjusted to provide relatively narrow openings to restrict the flow of helium from tube 30 in order to reduce the consumption of that gas. The iris diaphragms may be omitted, especially if the diameter of tube 30 is sufficiently small that a minimal amount of helium is required to fill that tube. Also, the top end cap is not essential although it is a useful element if the helium is to be recovered. The helium flowing through tube 30 may be exhausted directly from the open end thereof.

The following specific example illustrates the advantages of the apparatus of the present invention. The apparatus of Figure 2 was employed except that the iris diaphragms and the top end cap 34 were not employed. The length of tube 30 was 1.2 m, and the inside diameter thereof was 12.7 mm. The opening in the bottom of end cap 32 through which fiber 16 extends was 8.7 mm. The outside diameter of insulating tube 50 was 76.2 mm.

The heat exchanger 62 was constructed by forming into a 101.6 mm diameter coil a section of 4.8 mm OD copper tubing having length of 2.67 m. The coil was submerged in a dewar of liquid nitrogen. This apparatus was capable of cooling helium gas flowing therethrough to liquid nitrogen temperature.

The top of cooler 30 was located 0.81 m below the bottom of the fiber draw furnace. The coater was situated 0.3 m below the bottom of cooling means 24. A pure fused silica fiber having a diameter of 125 μm was drawn from the furnace at a temperature about 2250°C. Coater 20 applied to the fiber a coating of DeSoto 950×037 UV curable acrylate. The fiber draw rate was varied from 1 to 5 m/sec. The fiber temperature at the top of the cooler and the minimum helium flow rate required to provide a constant coating thickness are set forth in Table 1.

TABLE 1

| Draw speed (m/sec) | Fiber temp. at top of tube 30 (°C) | He flow required for constant coating thickness (l/min) |
|---|---|---|
| 1 | 160 | 2.7 |
| 2 | 355 | 5.3 |
| 3 | 465 | 10.5 |
| 4 | 540 | 20.4 |
| 5 | 585 | 39.9 |

It is noted that in order to achieve a constant coating thickness, the fiber temperature at the input of the coater must not exceed some predetermined value depending upon the particular coating material employed. For the DeSoto 950×037 UV curable coating, the maximum fiber temperature is about 40°C. While this type of coating material was being applied, a drawing apparatus employing a fiber cooler of the type shown in Figure 2 was capable of drawing fiber at the rate of 6.2 m/sec. without any decrease in coating thickness. The drawing rate was limited by the inherent limit of the drawing apparatus and not by the inability of the fiber cooler to cool the fiber while maintaining fiber stability.

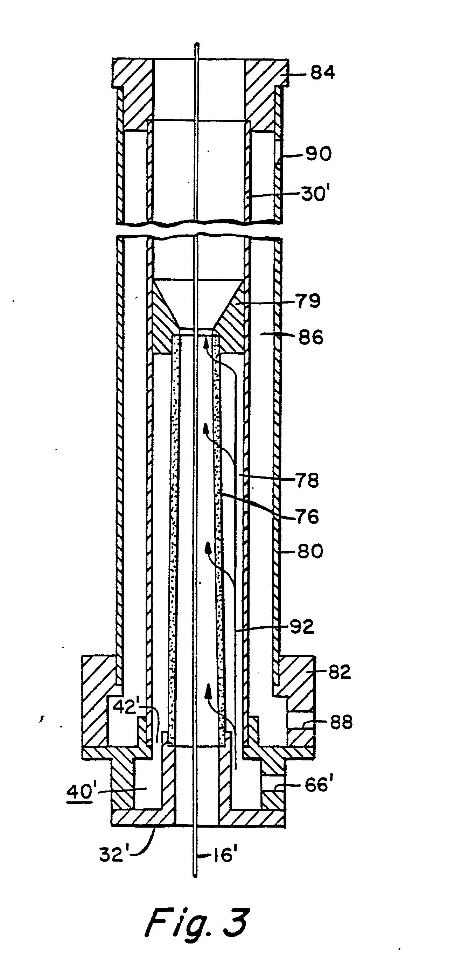

In the embodiment shown in Figure 3, in which elements similar to those of Figure 2 are represented by primed reference numerals, the helium is diffused radially inwardly toward fiber 16' through a cylindrically-shaped, porous member 76 which may comprise a screen, porous metal tube, perforated metal tube or the like. The bottom end of tube 76 is supported by end cap 32' and the top end thereof is supported by a bracket 79 which is supported by tube 30'. A tubular housing 80, which is supported by brackets 82 and 84, forms a chamber 86 in which a liquified gas such as liquid nitrogen is disposed. This prevents heat from being transferred inwardly to the helium flowing in tube 30' from the ambient air. Chamber 86 is provided with an inlet orifice 88 and an exhaust orifice 90.

Cooled helium flows through inlet orifice 66', annular manifold 40' and annular slot 42' into a cylindrical chamber 78, which is formed between porous member 76 and tube 30'. As illustrated by multi-headed arrow 92, the helium diffuses through porous member 76 toward fiber 16'. Thus the tendency of the inflowing helium to vibrate fiber 16' is minimized.

Whereas porous member 76 is illustrated as being slightly tapered, the walls thereof may be parallel. A 320 mesh untapered cylindrical screen has been satisfactorily demonstrated.

### Claims

1. An apparatus for drawing optical fibers comprising: a source of softened or molten glass (12) from which a fiber (16, 16') is drawn; means (30, 40, 42, 30', 40', 42', 76, 78) for cooling said fiber (16, 16'); means situated between said source and said cooling means for measuring the diameter of said fiber (16, 16'); and means (20) for applying a protective coating to the cooled fiber (16, 16'); characterised in that said cooling means comprises an elongate tube (30, 30') surrounding said fiber (16, 16'); a source (60) of coolant gas; and means (40, 42, 40', 42', 76, 78) surrounding said fiber (16, 16') at one end of said tube (30, 30') for flowing said coolant gas such that it has a flow component which is directed radially inwardly toward said fiber (16, 16') and a flow component which is directed longitudinally toward the opposite end of said tube (30, 30').

2. An apparatus in accordance with claim 1 wherein said means (40, 42, 40', 42', 76, 78) for directing coolant gas is situated at the end of said tube (30, 30') from which said fiber (16, 16') exits.

3. An apparatus in accordance with claim 2, wherein said elongate tube (30, 30') is vertically oriented and said means (40, 42) for directing coolant gas comprises an annular manifold (40, 40') coaxially disposed with respect to said tube (30, 30') and an annular slot (42, 42') connecting said manifold (40, 40') to the bottom end of said tube (30, 30').

4. An apparatus in accordance with claim 3, further comprising means (48, 46, 72) at the top end of said tube (30) for exhausting the coolant gas flowing through said tube (30).

5. An apparatus in accordance with claim 1 or 2, wherein said means (40', 42', 76, 78) for directing coolant gas comprises a cylindrically-shaped porous member (76) surrounding said fiber (16') at one end of said tube (30'), a chamber (78) surrounding said porous member (76), and means (40, 42') for supplying said coolant gas to said chamber (78).

6. An apparatus in accordance with claim 5, wherein said elongate tube (30') is vertically oriented, said cylinderically-shaped porous member (76) being located at the bottom end of said tube (30').

7. An apparatus according to any one of the preceding claims, wherein said coolant gas is helium.

8. An apparatus in accordance with any one of the preceding claims, further comprising an iris diaphragm (54, 56) at that end of said tube (30) into which said fiber (16) enters or at both ends of said tube (30).

9. An apparatus in accordance with any one of the preceding claims, further comprising means (62, 68) for cooling said coolant gas before it flows into said tube (30).

### Patentansprüche

1. Vorrichtung zum Ziehen optischer Fasern bestehend aus:

einer Quelle aus erweichtem oder geschmolzenem Glas (12), aus der eine Faser (16, 16') gezogen wird; einer Einrichtung (30, 40, 42, 30', 40', 42', 76, 78) zum Kühlen der Faser (16, 16'); einer zwischen der Quelle und der Kühleinrichtung angeordneten Einrichtung zur Messung des Durchmessers der Faser (16, 16'); und aus einer Einrichtung (20) zum Aufbringen einer Schutzbeschichtung auf die abgekühlte Faser (16, 16') dadurch gekennzeichnet, daß die Kühleinrichtung ein die Faser (16, 16') umgebendes längliches Rohr (30, 30'), eine Quell (60) mit Kühlmittelgas und eine die Faser (16, 16') an einem Ende des Rohres (30, 30') umgebende Einrichtung (40, 42, 40', 42', 76, 78) zum Einströmen des Kühlmittelgases in der Form aufweist, daß es eine Strömungskomponente, die radial einwärts in Richtung auf die Faser (16, 16') gerichtet ist, und eine Strömungskomponente besitzt, die in Längsrichtung auf das gegenüberliegende Ende des Rohres (30, 30') gerichtet ist.

2. Vorrichtung nach Anspruch 1, dadurch gekennzeichnet, daß die Einrichtung (40, 42, 40', 42', 76, 78) für das Richten des Kühlmittelgases an dem Ende des Rohres (30, 30') angeordnet ist, aus dem die Faser (16, 16') austritt.

3. Vorrichtung nach Anspruch 2, dadurch gekennzeichnet, daß das längliche Rohr (30, 30') vertikal orientiert ist, und daß die Einrichtung (40, 42) zum Richten von Kühlmittelgas einen ringförmigen Verteiler (40, 40'), der koaxial bezüglich des Rohres (30, 30') angeordnet ist, und einen ringförmigen Schlitz (42, 42') aufweist, der den Verteiler (40, 40') mit dem unteren Ende des Rohres (30, 30') verbindet.

4. Vorrichtung nach Anspruch 3, weiterhin gekennzeichnet durch eine Einrichtung (48, 46, 72) am oberen Ende des Rohres (30) für das Abgeben des Kühlmittelgases, das durch das Rohr (30) strömt.

5. Vorrichtung nach Anspruch 1 oder 2, dadurch gekennzeichnet, daß die Einrichtung (40', 42', 76, 78) zum Richten des Kühlmittelgases sich zusammensetzt aus einem zylinderförmigen porösen Element (76), das die Faser (16') an einem Ende des Rohres (30') umgibt, einer Kammer (78), die das poröse Element (76) umgibt, und aus einer Einrichtung (40, 42') zum Zuführen des Kühlmittelgases zu der Kammer (78).

6. Vorrichtung nach Anspruch 5, dadurch gekennzeichnet, daß das längliche Rohr (30') vertikal orientiert ist, wobei das zylinderförmige poröse Element (76) an dem unteren Ende des Rohrs (30') angeordnet ist.

7. Vorrichtung nach einem der vorangehenden Ansprüche, dadurch gekennzeichnet, daß das Kühlmittelgas aus Helium besteht.

8. Vorrichtung nach einem der vorangehenden Ansprüche, weiterhin gekennzeichnet, durch eine Irishblende (54, 56) an dem Ende des Rohres (30), in das die Faser (16) eintritt, oder an beiden Enden des Rohres (30).

9. Vorrichtung nach einem der vorangehenden Ansprüche, weiterhin gekennzeichnet, durch eine Einrichtung (62, 68) zum Abkühlen des Kühlmittelgases, ehe es in das Rohr (30) strömt.

## Revendications

1. Appareil pour étirer des fibres optiques, comprenant une source de verre ramolli ou fondu (12) à partir de laquelle une fibre (16, 16') est étirée, des moyens (30, 40, 42, 30', 40', 42', 76, 78) pour refroidir ladite fibre (16, 16'), des moyens disposés entre ladite source et lesdits moyens de refroidissement pour mesurer le diamètre de ladite fibre (16, 16') et des moyens (20) pour appliquer un revêtement protecteur sur la fibre refroidie (16, 16'), caractérisé en ce que lesdits moyens de refroidissement comprennent un tube allongé (30, 30') entourant ladite fibre (16, 16'), une source (60) d'un gaz de refroidissement, et des moyens (40, 42, 40', 42', 76, 78) entourant ladite fibre (16, 16') à une extrémité dudit tube (30, 30') pour faire s'écouler ledit gaz de refroidissement de façon qu'il présente une composante d'écoulement qui est dirigée radialement vers l'intérieur vers ladite fibre (16, 16') et une composante d'écoulement qui est dirigée longitudinalement vers l'extrémité opposée dudit tube (30, 30').

2. Appareil suivant la revendication 1, caractérisé en ce que lesdits moyens (40, 42, 40', 42', 76, 78) pour diriger le gaz de refroidissement sont disposés à l'extrémité dudit tube (30, 30') à partir de laquelle sort ladite fibre (16, 16').

3. Appareil suivant la revendication 2, caractérisée en ce que ledit tube allongé (30, 30') est orienté verticalement et lesdits moyens (40, 42) pour diriger le gaz de refroidissement comprennent un collecteur annulaire (40, 40') disposé co-axialement par rapport audit tube (30, 30') et une fente annulaire (42, 42') reliant ledit collecteur (40, 40') à l'extrémité inférieure dudit tube (30, 30').

4. Appareil suivant la revendication 3, caractérisé en ce qu'il comprend en outre des moyens (48, 46, 72) à l'extrémité supérieure dudit tube (30) pour faire sortir le gaz de refroidissement s'écoulant à travers ledit tube (30).

5. Appareil suivant la revendication 1 ou 2, caractérisé en ce que lesdits moyens (40', 42', 76, 78) pour diriger le gaz de refroidissement comprennent un organe poreux (76) de forme cylindrique entourant ladite fibre (16') à une extrémité dudit tube (30'), une chambre (78) entourant ledit organe poreux (76) et des moyens (40, 42') pour amener ledit gaz de refroidissement à ladite chambre (78).

6. Appareil suivant la revendication 5, caractérisé en ce qu ledit tube allongé (30') est orienté verticalement, ledit organe poreux (76) de forme cylindrique étant disposé à l'extrémité inférieure dudit tube (30').

7. Appareil suivant l'une quelconque des revendications précédentes, caractérisé en ce que ledit gaz de refroidissement est de l'hélium.

8. Appareil suivant l'une quelconque des revendications précédentes, caractérisé en ce qu'il comprend en outre un diaphragme (54, 56) à iris à l'extrémité dudit tube (30) dans laquelle pénètre ladite fibre (16) ou aux deux extrémités dudit tube (30).

9. Appareil suivant l'une quelconque des revendications précédentes, caractérisé en ce qu'il comprend en outre des moyens (62, 68) pour refroidir ledit gaz de refroidissement avant qu'il s'écoule dans ledit tube (30).

Fig. 1

Fig. 2

0 079 186

0 079 186

Fig. 3